# EUROPEAN PATENT SPECIFICATION

(11) **EP 1 884 422 B1**
(45) Date of publication and mention of the grant of the patent: **20.03.2013**
(21) Application number: 07253002.5
(22) Date of filing: 31.07.2007
(51) Int. Cl.: B60R 25/04, B60Q 1/00

(54) **Vehicle control apparatus and vehicle having the same**
Fahrzeugsteuerungsvorrichtung und Fahrzeug damit
Appareil de contrôle de véhicule et véhicule l'utilisant

(30) Priority: 01.08.2006 JP 2006210007
(43) Date of publication of application: 06.02.2008
(73) Proprietor: Yamaha Hatsudoki Kabushiki Kaisha, Shizuoka-ken Shizuoka 438-8501 (JP)
(72) Inventor: Yoshizawa, Akihiro c/o Yamaha Hatsudoki Kabushiki Kaisha, Shizuoka-ken 438-8501 (JP)
(74) Representative: Moreland, David

(56) References cited:
- US-A1- 2005 242 929

## Description

### FIELD OF THE INVENTION

The present invention relates to a vehicle control apparatus and a vehicle having the same, and in particular to a vehicle control apparatus for permitting use of a vehicle.

### BACKGROUND TO THE INVENTION

A vehicular electronic key system for permitting use of a related vehicle is known, for example, from JP-A-2004-114860. This reference discloses a vehicular electronic key system including a control apparatus mounted to a vehicle and an electronic key for transmitting a response signal based on reception of a request signal from the control apparatus. The control apparatus is provided with request signal generating means for outputting the request signal at previously set constant time periods (10 seconds through 100 seconds) to the electronic key when an engine is operated.

According to the vehicular electronic key system disclosed in JP-A-2004-114860, since the period of outputting the request signal to the portable machine is previously set to the constant time period (either of 10 seconds through 100 seconds), when the period of outputting the request signal is set to, for example, 100 seconds, there poses a problem that, if the electronic key is dropped during high speed running of the vehicle, a large distance may be covered before a warning signal is produced. Further, when the period of outputting the request signal is set to, for example, 10 seconds, there poses a problem that when the vehicle is stopped, despite a situation where a user recognizes that the electronic key has been dropped, consumption of a battery of the electronic key is increased since the output of the request signal is still carried out by the comparatively short interval of 10 seconds.

The invention has been carried out in order to resolve the above-described problem and it is an object of the invention to provide a vehicle control apparatus capable of informing that a portable machine is dropped at a location as proximate as possible to a location of dropping the portable machine while restraining consumption of a battery of the portable machine and a vehicle having the same. A typical prior art system can be seen in document US-A-2005/024 2929 which forms the basis of the preamble of claim 1.

### SUMMARY OF THE INVENTION

The solution to the problem above is given in the characterising part of claim 1.

Various aspects of the present invention are defined in the independent claims. Some preferred features are defined in the dependent claims.

A vehicle control apparatus described herein as a first example comprises:
transmitting means for transmitting at least two code request signals to a portable device associated with a vehicle to determine if said portable device is disposed within a predetermined range of the vehicle, wherein the at least two code request signals are separately transmitted over a transmission period;
receiving means for receiving a code signal transmitted from the portable device receiving the code request signal;
code checking means for checking a code of the code signal received by the receiving means; and optionally
a transmission control portion for changing the transmission period in accordance with a running condition of the vehicle.

When the portable device is within a predetermined range of the vehicle, the vehicle may be permitted to be operated. However, when the portable device is outwith the predetermined range, initial operation of the vehicle may not be permitted. Furthermore, the above example is adapted to provide an indication that the portable device has been dropped by a user, for example during use of the vehicle.

A vehicle control apparatus described herein as a second example comprises transmitting means for transmitting a code request signal for confirming whether a portable machine is disposed within a predetermined range of a vehicle to the portable machine by a predetermined transmission period in order to detect dropping of the portable machine for acknowledging to permit use of the vehicle, receiving means for receiving a code signal transmitted from the portable machine receiving the code request signal, code checking means for checking a code of the code signal received by the receiving means, and a transmission control portion for changing a period of transmitting the code request signal by the transmitting means in accordance with a situation of running the vehicle.

According to the vehicle control apparatus according to the first or second examples, as described above, by providing the transmission control portion for changing the transmission period or period of transmitting the code request signal by the transmitting means for transmitting the code request signal to the portable device or machine at the predetermined transmission period to the vehicle control apparatus in accordance with the condition or situation of running the vehicle in order to detect dropping of the portable device or machine, for example, when the transmission period of the code request signal is reduced in accordance with the increase in the vehicle speed constituting a kind of the situation of running the vehicle, even in a case in which the vehicle runs at high speed, it can be confirmed swiftly whether the portable device or machine is dropped, and therefore, the driver can be informed of the fact that there is a possibility of dropping the portable device or machine at a location as proximate to a location of dropping the portable device or machine as possible. Further, in this case, when the vehicle runs at low speed, the transmission period of the code request signal is increased, and therefore, a number of times of outputting the code signal by the portable device or machine is reduced, as a result, consumption of a battery of the portable device or machine can be restrained.

In the vehicle control apparatus according to the first or second examples, the transmission control portion may change the period of transmitting the code request signal by the transmitting means in accordance with a speed of the vehicle. When constituted in this way, the transmission period of the code request signal by the transmitting means may be changed in accordance with the condition or situation of running the vehicle.

In the vehicle control apparatus for changing the transmission period of the code request signal by the transmitting means in accordance with the speed of the vehicle, the transmission control portion may control such that the larger the speed of the vehicle becomes, the smaller the period of transmitting the code request signal by the transmitting means becomes. When constituted in this way, it can be informed that the portable device or machine has been dropped at a location as proximate to a location of dropping the portable device or machine as possible even in a case of running at high speed, and when the vehicle runs at low speed or when the vehicle stops, consumption of the battery of the portable device or machine can be restrained.

In the vehicle control apparatus for controlling to reduce the transmission period in accordance with an increase in the speed of the vehicle, the apparatus may further comprise a first timer for measuring the period of transmitting the code request signal. When constituted in this way, the period of transmitting the code request signal may be measured by the first timer.

In the vehicle control apparatus according to the first or second examples, the apparatus may further comprise alarming means for notifying a driver that the portable device or machine is not disposed within the predetermined range of the vehicle when the code checking means cannot check the code of the code signal. When constituted in this way, the driver can be informed of the fact that the portable device or machine has been dropped.

In the vehicle control apparatus further comprising the alarming means for notifying the driver that the portable device or machine is not disposed within the predetermined range of the vehicle, the alarming means may be constituted to notify the driver that the portable device or machine is not disposed within the predetermined range of the vehicle when the receiving means cannot receive the code signal continuously by a plurality of times. When constituted in this way, even in a case in which the receiving means cannot receive the code signal once according to noise from the vehicle and noise from a surrounding environment of the vehicle, when the code signal is received in receiving at a next time, it can be recognized that the portable device or machine is not dropped, and therefore, it can be restrained that an erroneous notification is carried out frequently to the driver.

In the vehicle control apparatus further comprising alarming means for notifying the driver that the portable device or machine is not disposed within the predetermined range of the vehicle, the apparatus may further comprise a notification control portion for changing a notification time period until the alarming means notifies driver that the portable device or machine is not disposed within the predetermined range of the vehicle since the code checking means could not check the code of the code signal in accordance with a condition or situation of running the vehicle. When constituted in this way, for example, by shortening a notification time period until the driver is informed of the fact that the portable device or machine is not disposed within the predetermined range in accordance with the increase in the vehicle speed, the driver can swiftly confirm whether the portable device or machine is dropped, and therefore, even when the vehicle is running at high speed, the driver can be informed of the fact that the portable device or machine is dropped at a location as proximate to a location of dropping the portable device or machine as possible.

In the vehicle control apparatus further comprising the notification control portion for changing notification time period in accordance with the condition or situation of running the vehicle, the notification control portion may shorten the notification time period in accordance with an increase in the speed of the vehicle. When constituted in this way, in a case in which the speed of the vehicle is large, the notification time period until the driver is informed of the fact that the portable device or machine is not disposed within the predetermined range of the vehicle can be shortened, and therefore, the driver can be informed of the fact that the portable device or machine is dropped at a location as proximate to a location of dropping the portable device or machine as possible.

In the vehicle control apparatus for shortening the notification time period in accordance with an increase in the speed of the vehicle, the apparatus may further comprise a second timer for measuring a notification time period set in accordance with the speed of the vehicle, wherein the notification control portion controls to notify by, or is adapted to activate the alarming means when the notification time period by the second timer is finished to measure, or has determined that the notification time period has elapsed. When constituted in this way, the notification time period set in accordance with the speed of the vehicle can be measured by the second timer.

In the vehicle control apparatus for controlling to reduce the transmission time period in accordance with an increase in the speed of the vehicle, the transmission control portion may be adapted to increase the period of transmitting the code request signal when the speed of the vehicle is continued substantially in a constant state. In this way, when the state in which the speed of the vehicle is substantially constant continues, it seems that a motion of considerably moving the driver is reduced, and therefore, a possibility of dropping the portable device or machine owned by the driver is reduced. In this case, as described above, when the period of transmitting the code request signal is controlled to increase, a number of times of outputting the code signal by the portable device or machine can be reduced, and therefore, consumption of the battery of the portable device or machine can be reduced.

The transmission control portion may be adapted to change the transmission period in accordance with a distance traveled by the vehicle.

A vehicle control apparatus described herein as a third example comprises:
transmitting means for transmitting at least two code request signals to a portable device associated with a vehicle to determine if said portable device is disposed within a predetermined range of the vehicle, wherein the at least two code request signals are separately transmitted over a transmission period;
receiving means for receiving a code signal transmitted from the portable device receiving the code request signal;
code checking means for checking a code of the code signal received by the receiving means;
alarming means for notifying a driver that the portable device is not disposed within the predetermined range of the vehicle when the code signal cannot be checked by the code checking means; and
a notification control portion for making the alarming means notify that the portable device is not disposed within the predetermined range of the vehicle when a distance traveled by the vehicle reaches a first distance by continuing a state in which the code signal cannot be checked by the code checking means.

A vehicle control apparatus described herein as a fourth example comprises transmitting means for transmitting a code request signal for confirming whether a portable machine for acknowledging to permit use of a vehicle is disposed within a predetermined range of the vehicle to the portable machine by a predetermined transmission period, receiving means for receiving a code signal transmitted from the portable machine receiving the code request signal, code checking means for checking a code of the code signal received by the receiving means, alarming means for notifying a driver that the portable machine is not disposed within the predetermined range of the vehicle when the code signal cannot be checked by the code checking means, and a notification control portion for making the alarming means notify that the portable machine is not disposed within the predetermined range of the vehicle when a distance of moving the vehicle reaches a first distance by continuing a state in which the code signal cannot be checked by the code checking means.

According to the vehicle control apparatus according to the third or fourth examples, as described above, when the code signal cannot be checked, in a case in which a state in which the code signal cannot be checked by the alarming means for notifying the driver that the portable device or machine is dropped is continued and the distance of moving the vehicle reaches the first distance, by providing the alarming means with the notification control portion for notifying that the portable device or machine is not disposed within the predetermined range, when the state in which the code signal cannot be checked is continued and the first distance is reached, the driver can be alarmed the fact that the portable device or machine is dropped or the like, and therefore, regardless of the speed of running the vehicle, the driver can be informed of the fact that there is a possibility of dropping the portable device or machine at a vicinity of a location remote from a location of dropping the portable machine by the first distance. Thereby, regardless of the speed of running the vehicle, the driver can be informed of the fact that the portable device or machine is dropped at a spot or location at a constant distance (first distance) from the location of dropping the portable device or machine.

In the vehicle control apparatus according to the third or fourth examples, the apparatus may further comprise a display portion for displaying a distance from a location or spot at which the code signal is initially not checked by the code checking means to a current location or spot of running the vehicle when the distance of moving the vehicle reaches the first distance and a notification by the alarming means is carried out. When constituted in this way, the driver can easily know the distance from the location of dropping the portable device or machine by the display portion.

In the vehicle control apparatus according to the third or fourth examples, the apparatus may further comprise transmission controlling means for controlling to transmit the code request signal at each second distance shorter than the first distance to the portable device or machine. When constituted in this way, the code signal can be received by a plurality of times during a time period until the vehicle reaches the first distance, and therefore, it can be restrained that an erroneous notification is carried out to the driver owing to deletion of the code signal once by noise from the vehicle and noise from a surrounding environment of the vehicle.

In the vehicle control apparatus according to the third or fourth examples, the apparatus may further comprise rotation detecting means for detecting rotation of a predetermined rotating portion when the vehicle is moved, wherein the distance of moving the vehicle is calculated based on a detection result of the rotation detecting means. When constituted in this way, the distance of moving the vehicle may be calculated.

A vehicle control apparatus described herein as a fifth example comprises:
transmitting means for transmitting at least two code request signals to a portable device associated with the vehicle to determine if said portable device is disposed within a predetermined range of the vehicle, wherein the at least two code request signals are separately transmitted over a predetermined transmission period;
receiving means for receiving a code signal transmitted from the portable device receiving the code request signal;
code checking means for checking a code of the code signal received by the receiving means;
alarming means for notifying a driver that the portable device is not disposed within the predetermined range when the code signal cannot be checked by the code checking means; and
a notification control portion for changing a notification time period until the alarming means informs the driver that the portable device is not disposed within the predetermined range of the vehicle since the code checking means could not check the code of the code signal in accordance with a running condition the vehicle.

A vehicle control apparatus described herein as a sixth example comprises transmitting means for transmitting a code request signal for confirming whether a portable machine is disposed within a predetermined range of a vehicle to the portable machine by a predetermined transmission period in order to detect dropping of the portable machine for acknowledging to permit use of the vehicle, receiving means for receiving a code signal transmitted from the portable machine receiving the code request signal, code checking means for checking a code of the code signal received by the receiving means, alarming means for notifying a driver that the portable machine is not disposed within the predetermined range of the vehicle when the code signal cannot be checked by the code checking means, and a notification control portion for changing a notification time period until the alarming means informs the driver that the portable machine is not disposed within the predetermined range of the vehicle since the code checking means could not check the code of the code signal in accordance with a situation of running the vehicle.

In the vehicle control apparatus according to the fifth or sixth examples, as described above, when the code signal cannot be checked by the code checking means, by providing the alarming means for notifying the driver that the portable device or machine is dropped, and the notification control portion for changing a notification time period until the alarming means informs the driver that the portable device or machine is dropped since the code checking means could not check the code of the code signal in accordance with the situation of running the vehicle, by shortening the notification time period until the driver is informed of the fact that the portable device or machine is not disposed within the predetermined range of the vehicle in accordance with the increase in the vehicle speed constituting a kind of the situation of running the vehicle, the driver can swiftly confirm whether the portable device or machine is dropped, and therefore, even when the vehicle runs at high speed, the driver can be informed of the fact that the portable device or machine is dropped at a location as proximate to a location of dropping the portable machine as possible.

A vehicle described herein as a seventh example comprises the vehicle control apparatus described in any the above-described constitutions. When constituted in this way, for example, by providing the vehicle control apparatus according to the first or second examples to the vehicle, the driver can be informed of the fact that the portable device or machine is dropped at a location as proximate to a location of dropping the portable device or machine as possible while restraining consumption of the battery of the portable machine.

### BRIEF DESCRIPTION OF THE DRAWINGS

These and other aspects of the present invention will now be described, by way of example only, with reference to the accompanying drawings, in which:
Fig. 1 is a side view showing a motorcycle according to a first embodiment of the invention;
Fig. 2 diagrammatically shows a constitution of a vehicle control apparatus of the motorcycle according to the first embodiment shown in Fig. 1;
Fig. 3 is a diagram for explaining calculation of a subtracting counter length of a drop detecting timer of the motorcycle according to the first embodiment shown in Fig. 1;
Fig. 4 is a graph for explaining the calculation of the subtracting counter length of the drop detecting timer of the motorcycle according to the first embodiment shown in Fig. 1;
Fig. 5 is a diagram for explaining calculation of a subtracting counter length of a drop alarming timer of the motorcycle according to the first embodiment shown in Fig. 1;
Fig. 6 is a graph for explaining calculation of the subtracting counter length of the drop alarming timer of the motorcycle according to the first embodiment shown in Fig. 1;
Fig. 7 is a view for explaining a constitution of a meter of the motorcycle according to the first embodiment shown in Fig. 1;
Fig. 8 is a flowchart showing a processing flow of the vehicle control apparatus according to the first embodiment shown in Fig. 1;
Fig. 9 is a flowchart showing a processing flow of dropping detection of the vehicle control apparatus according to the first embodiment shown in Fig. 1;
Fig. 10 is a flowchart showing a processing flow of dropping detection of a vehicle control apparatus according to a second embodiment of the invention;
Fig. 11 is a diagram for explaining a constitution of a vehicle control apparatus according to a third embodiment of the invention;
Fig. 12 is a view for explaining a constitution of a meter of the vehicle control apparatus according to the third embodiment of the invention; and
Fig. 13 is a flowchart showing a processing flow of dropping detection of the vehicle control apparatus according to the third embodiment of the invention.

### DETAILED DESCRIPTION OF THE DRAWINGS

### First Embodiment

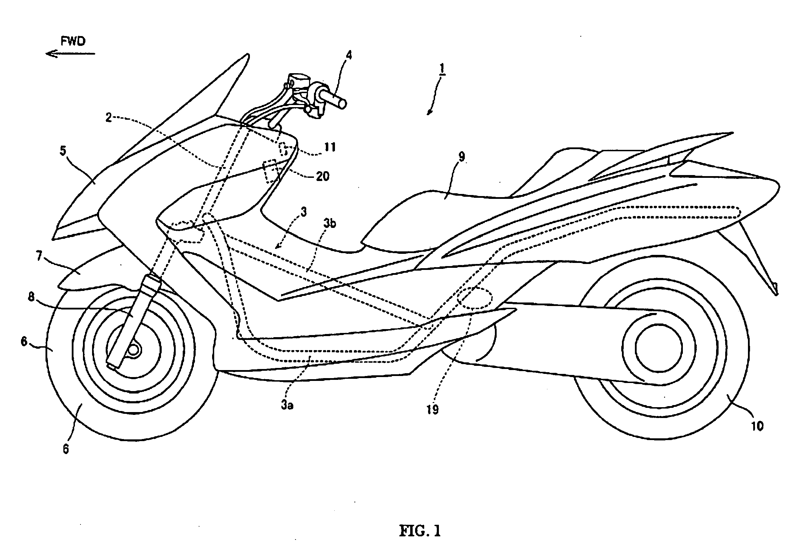

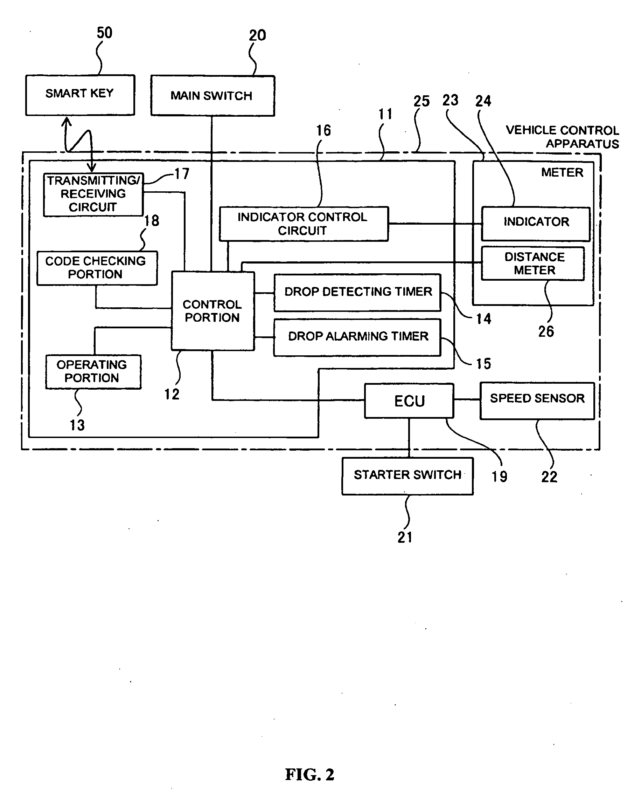

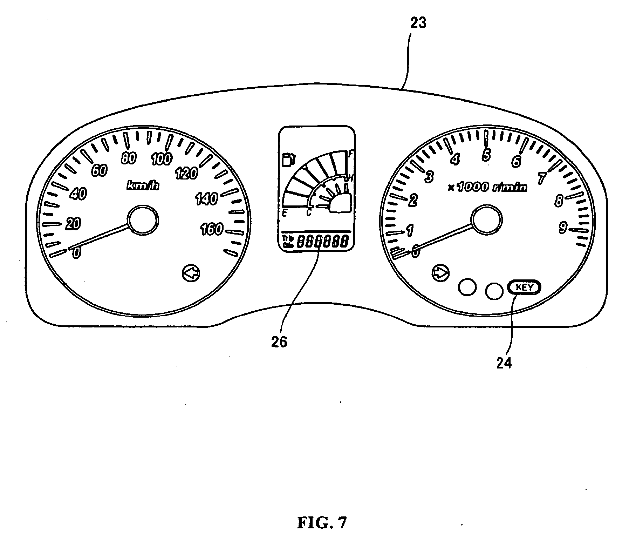

Fig. 1 is a side view showing a total structure of a motorcycle according to a first embodiment of the invention. Fig. 2 through Fig. 7 are drawings demonstrating a constitution of a vehicle control apparatus of the motorcycle according to the first embodiment shown in Fig. 1. Further, according to the first embodiment, as an example of a vehicle of the invention, a motorcycle will be explained. An arrow marked FWD in the drawings indicates a front side in a running direction of the motorcycle. According to the motorcycle 1 of the first embodiment of the invention, as shown by Fig. 1, a main frame 3 is arranged on a rear side of a head pipe 2. The main frame 3 includes a frame main body portion 3a forming a main body portion of the main frame 3 and a support portion 3b for supporting two points of an upper portion of the frame main body portion 3a. A vehicle body frame is constituted by the head pipe 2 and the main frame 3.

A handle 4 attached with a throttle (not illustrated) is arranged on an upper side of the head pipe 2. A front cowl 5 for covering a front side of the head pipe 2 is provided at the front side of said head pipe 2. A lower side of the front cowl 5 is arranged with a front wheel 6, and a front fender 7 is arranged on an upper side of the front wheel 6. The front wheel 6 is rotatably attached to lower portions of a pair of front forks 8.

A seat 9 is arranged at an upper portion of a rear side of the main frame 3. Further, a rear wheel 10 is rotatably arranged on a lower side of a rear end portion of the main frame 3.

A control unit 11 is provided on a rear side of the head pipe 2. As shown in Fig. 2, the control unit 11 is provided with a control portion 12, an operating portion 13, a drop detecting timer 14, a drop alarming timer 15, an indicator control circuit 16, a transmitting/receiving circuit 17 and a code checking portion 18 respectively connected to the control portion 12. The control portion 12 is an example of a 'transmission control portion' and a 'notification control portion' of the invention. The drop detecting timer 14 is an example of a 'first timer' of the invention. The drop alarming timer 15 is an example of a 'second timer' of the invention. The transmitting/receiving circuit 17 is an example of a 'transmitting means' and a 'receiving means' of the invention. The code checking portion 18 is an example of a "code checking means' of the invention.

The control portion 12 is connected to an ECU (engine control unit) 19 arranged on a lower side of the seat 9 (refer to Fig. 1), and a main switch 20 (refer to Fig. 2) arranged on a lower side of the center portion in a width direction of the handle 4 (refer to Fig. 1). The control portion 12 and ECU 19 are constituted to carry out serial communication by using SCI (serial communication interface), which is not illustrated. The ECU 19 is connected to a starter switch 21 attached to the handle 4 (refer to Fig. 1) and a speed sensor 22 arranged at a vicinity of the rear wheel 10 (refer to Fig. 1) for detecting a revolution number of the rear wheel 10. The speed sensor 22 is an example of a 'rotation detecting means' of the invention. The ECU 19 is provided with a function of transmitting the revolution number of the rear wheel 10 detected by the speed sensor 22 to the control portion 12.

According to the first embodiment, when the main switch 20 is turned ON, the control portion 12 is constituted to carry out communication with the transmitting/receiving circuit 17 and a smart key 50 for acknowledging to permit use of the motorcycle 1 mentioned later, and is provided with a function of starting the control unit 11 when it is determined that the smart key 50 is a smart key in correspondence with the motorcycle 1. Thereby, when it is determined that the smart key 50 is the smart key in correspondence with the motorcycle 1, a communication system between the control unit 11 and the smart key 50 is created for detecting drop of the smart key 50, mentioned later and the smart key 50 is brought into an ON state. The smart key 50 is an example of a 'portable device' or a 'portable machine' of the invention.

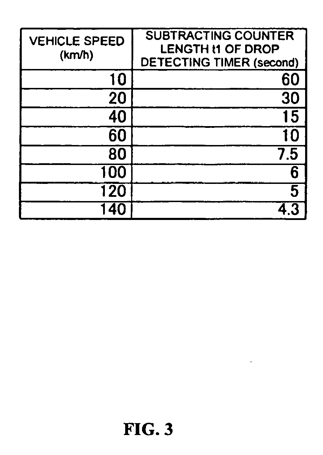

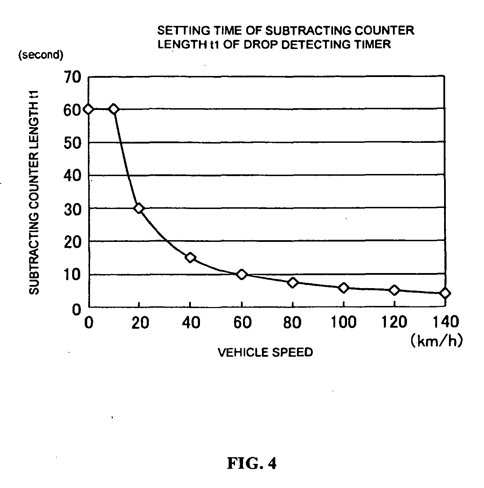

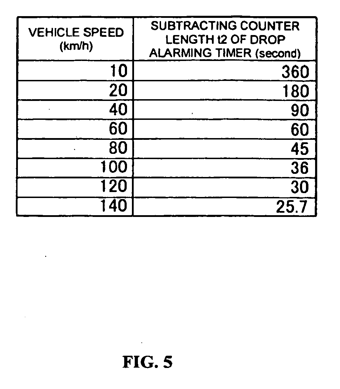

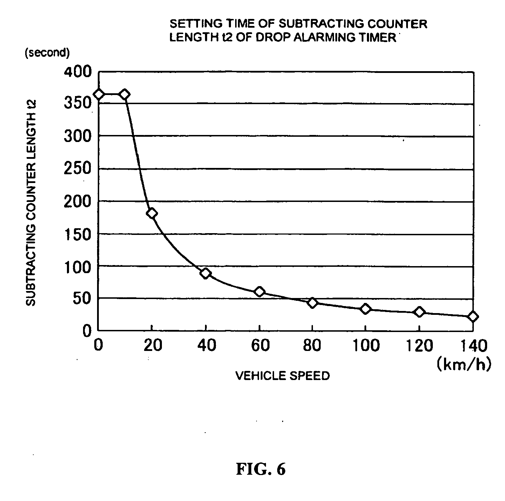

According to the first embodiment, the operating portion 13 is provided with a function of calculating a vehicle speed based on the revolution number of the rear wheel 10 detected by the speed sensor 22 and transmitted from the control portion 12 (ECU 19). Further, as shown by Fig. 3 and Fig. 4, the operating portion 13 is constituted such that when the motorcycle 1 runs at a speed equal to or faster than 10 km/h, a subtracting counter or countdown timer length (transmission period) t1 of the drop detecting timer 14 is calculated from an equation of t1=600/vehicle speed. Further, as shown by Fig. 5 and Fig. 6, the operating portion 13 is constituted such that a subtracting counter or countdown timer length t2 of the drop alarming timer 15 is calculated from an equation of t2=3600/vehicle speed As shown by Fig. 4 and Fig. 6, when the running speed of the motorcycle 1 is equal to or lower than 10 km/h, the subtracting counter length t1 (refer to Fig. 4) of the drop detecting timer 14 is fixed to 60 seconds and the subtracting counter length t2 (refer to Fig. 6) of the drop alarming timer 15 is fixed to 360 seconds. The drop detecting timer 14 is constituted such that when turned ON by the control portion 12, the subtracting counter becomes 0 after t1 second. The drop alarming timer 15 is constituted such that when turned ON by the control portion 12, the subtracting counter becomes 0 after t2 second.

The indicator control circuit 16 is connected to an indicator 24 provided at a meter 23 arranged on the rear side of the front cowl 5 (refer to Fig. 1). A vehicle control apparatus 25 is constituted by the meter 23, the speed sensor 22, ECU 19 and the control unit 11. The meter 23 is provided with a distance meter 26 comprising a liquid crystal display portion for displaying a distance of running the motorcycle 1 calculated by the operating portion 13 based on the revolution number of the rear wheel 10 acquired by the speed sensor 22. The control portion 12 and the distance meter 26 are constituted to carry out serial communication by using SCI (not illustrated). The indicator control circuit 16 is provided with a function of winking or turning off the indicator 24 by a signal from the control portion 12. The indicator 24 is an example of an 'alarming means' of the invention.

The transmitting/receiving circuit 17 is constituted to be able to communicate with the smart key 50. Specifically, according to the first embodiment, the smart key 50 includes a battery (not illustrated) and is recorded with an individual identification code for determining whether the smart key 50 corresponds to the motorcycle 1, and a drop detecting code for confirming whether the smart key 50 is disposed within a predetermined range (about 1 m) from the motorcycle 1 in order to determine whether a driver has dropped the smart key 50. The individual identification code is constituted by a complicated and long code in order to promote a robbery preventing function on one hand and the drop detecting code is constituted by a simple and short code for only determining whether the smart key 50 is disposed within the predetermined range (about 1 m) from the motorcycle 1. That is, an individual identification code signal in transmitting the individual identification code from the smart key 50 to the transmitting/receiving circuit 17 is constituted by a complicated and long signal, and a drop detecting code signal in transmitting the drop detecting code is constituted by a simple and short signal.

The transmitting/receiving circuit 17 is constituted to be able to transmit an individual identification code request signal for requesting the smart key 50 to transmit the individual identification code and a drop detecting code request signal for requesting the smart key 50 to transmit the drop detecting code to the smart key 50. The individual identification code request signal and the drop detecting code request signal are constituted by simple and short signals.

According to the first embodiment, the transmitting/receiving circuit 17 is constituted such that the individual identification code request signal is transmitted to the smart key 50 by the control portion 12 when the main switch 20 and the starter switch 21 and the like are depressed by the driver. The transmitting/receiving circuit 17 is constituted such that the drop detecting code request signal is transmitted to the smart key 50 when the subtracting counter of the drop detecting timer 14 becomes 0 in a state of making the communication system between the control unit 11 and the smart key 50 for detecting drop of the smart key 50 ON by the control portion 12. The transmitting/receiving circuit 17 is provided with a function of transmitting the signal received from the smart key 50 to the control portion 12.

The code checking portion 18 is provided with a function of acquiring the signal from the control portion 12 when the signal received from the smart key 50 is transmitted from the transmitting/receiving circuit 17 to the control portion 12. The code checking portion 18 is recorded with the individual identification code and the drop detecting code the same as the codes recorded to the smart key 50. The code checking portion 18 is constituted such that when the individual identification code or the drop detecting code is transmitted from the control portion 12 (smart key 50), it is determined whether the transmitted individual identification code or the transmitted drop detecting code and the individual identification code or the drop detecting code recorded to the code checking portion 18 coincide with each other.

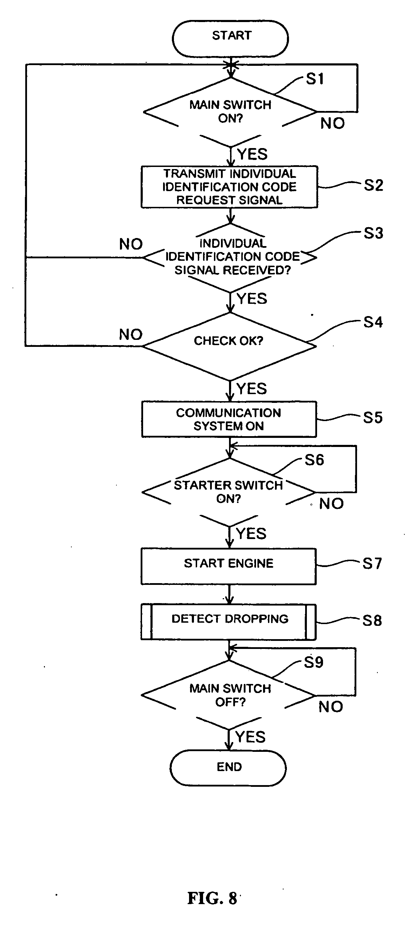

Fig. 8 is a flowchart showing a processing flow of the vehicle control apparatus according to the first embodiment shown in Fig. 1. A detailed explanation will now be given of the processing flow of the vehicle control apparatus 25 according to the first embodiment of the invention in reference to Fig. 2 and Fig. 8.

At step S1 shown in Fig. 8, it is determined whether the main switch 20 (refer to Fig. 2) is turned ON. At step S1, when it is determined that the main switch 20 is not turned ON, the determination of step S1 is repeated. When it is determined that the main switch 20 is turned ON, the operation proceeds to step S2 by transmitting that the main switch 20 has been turned ON to the control portion 12 (refer to Fig. 2). At step S2, the individual identification code request signal is transmitted from the transmitting/receiving circuit 17 (refer to Fig. 2) to the smart key 50 (refer to Fig. 2). At this occasion, when the smart key 50 is disposed within a communicatable range (about 1 m) at a vicinity of the control unit 11 (transmitting/receiving circuit 17), the individual identification code request signal from the transmitting/receiving circuit 17 is received by the smart key 50, and the individual identification code signal is transmitted from the smart key 50 to the transmitting/receiving circuit 17.

Thereafter, at step S3, it is determined whether the individual identification code signal is received by the transmitting/receiving circuit 17. At step S3, when it is determined that the individual identification code signal is not received, the operation returns to step S1. Further, at step S3, when it is determined that the individual identification code signal is received, the operation proceeds to step S4.

Thereafter, at step S4, the received individual identification code signal is transmitted to the code checking portion 18 by way of the control portion 12, and it is determined whether the individual identification code in correspondence with the individual identification code signal received from the smart key 50 and the individual identification code previously recorded in the code checking portion 18 coincide with each other by the code checking portion 18. At step S4, when it is determined that the individual identification code in correspondence with the individual identification code signal received from the smart key 50 and the individual identification code previously recorded in the code checking portion 18 do not coincide with each other, the operation returns to step S1. When it is determined that the individual identification code in correspondence with the individual identification code signal received from the smart key 50 and the individual identification code previously recorded in the code checking portion 18 coincide with each other, the operation proceeds to step S5. At step S5, the communication system between the control unit 11 and the smart key 50 for checking dropping of the smart key 50 is brought into an ON state.

Thereafter, at step S6, it is determined whether the starter switch 21 (refer to Fig. 2) is turned ON. At step S6, when it is determined that the starter switch 21 is not turned ON, the determination of step S6 is repeated. When it is determined that the starter switch 21 is turned ON, the operation proceeds to step S7 and an engine (not illustrated) is started.

At step S8, dropping of the smart key 50 is detected. Thereafter, at step S9, it is determined whether the main switch 20 is turned OFF. When it is determined that the main switch 20 is not turned OFF, the determination of step S9 is repeated. When it is determined that the main switch 20 is turned OFF, the processing is finished.

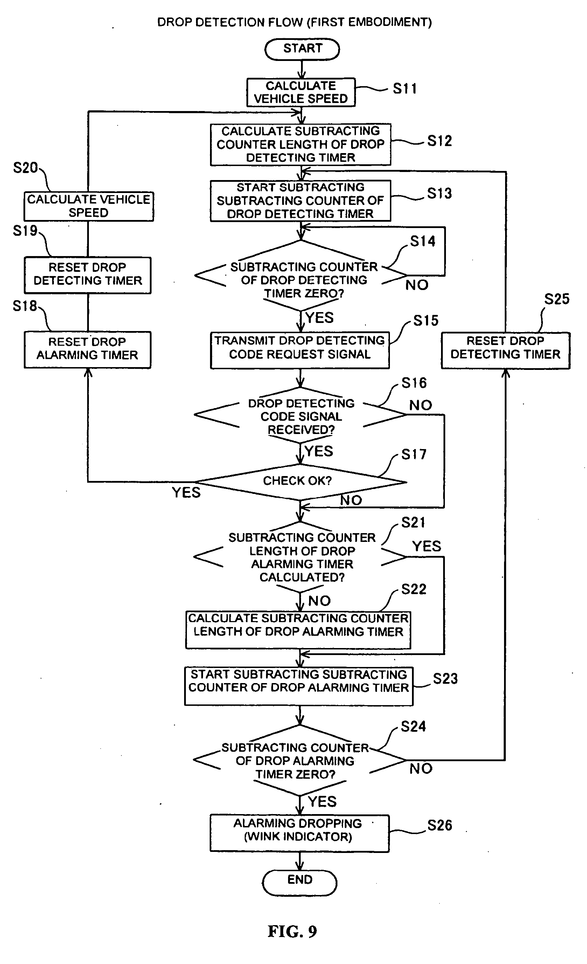

Fig. 9 is a flowchart outlining a processing flow of dropping detection of step S8 of Fig. 8. A detailed explanation will now be given of a dropping detection processing of the vehicle control apparatus 25 according to the first embodiment of the invention with reference to Fig. 1 through Fig. 6, Fig. 8 and Fig. 9.

At step S11 shown in Fig. 9, the revolution number of the rear wheel 10 (refer to Fig. 1) detected by the speed sensor 22 (refer to Fig. 2) is transmitted from the control portion 12 (refer to Fig. 2) to the operating portion 13 (refer to Fig. 2) through ECU 19 and the vehicle speed is calculated by the operating portion 13. At step S12, based on the vehicle speed calculated at step S11, the subtracting counter length t1 (refer to Fig. 3 and Fig. 4) of the drop detecting timer 14 is calculated by the operating portion 13. That is, as shown by Fig. 3 and Fig. 4, the subtracting counter length t1 of the drop detecting timer 14 is calculated from the equation of t1=600/vehicle speed by using the vehicle speed of the motorcycle 1 when the motorcycle 1 runs at a speed equal to or faster than 10 km/h, and the subtracting counter length t1 is fixed to 60 seconds when the speed of running the motorcycle 1 is equal to or slower than 10 km/h.

At step S13, the drop detecting timer 14 is turned ON and subtraction or countdown of the subtracting counter is started. The operation proceeds to step S14.

Thereafter, at step S14, it is determined whether the subtracting counter of the drop detecting timer 14 is 0. At step S14, when it is determined that the subtracting counter of the drop detecting timer 14 is not 0, the determination is repeated until the subtracting counter becomes 0. Further, at step S14, when it is determined that the subtracting counter of the drop detecting timer 14 is 0, the operation proceeds to step S15.

At step S15, the drop detecting code request signal is transmitted from the transmitting/receiving circuit 17 to the smart key 50. At this occasion, when the smart key 50 is disposed within the communicatable range (about 1 m) at a vicinity of the control unit 11 (transmitting/receiving circuit 17), the drop detecting code request signal from the transmitting/receiving circuit 17 is received by the smart key 50, and the drop detecting code signal is transmitted from the smart key 50 to the transmitting/receiving circuit 17.

Thereafter, at step S16, it is determined whether the drop detecting code signal is received by the transmitting/receiving circuit 17 within a constant period of time. At step S16, when it is determined that the drop detecting code signal is received, the operation proceeds to step S17. At step S17, the received drop detecting code signal is transmitted to the code checking portion 18 by way of the control portion 12, and it is determined by the code checking portion 18 whether the drop detecting code in correspondence with the drop detecting code signal received from the smart key 50 and the drop detecting code previously recorded in the code checking portion 18 coincide with each other. At step S17, when it is determined that the drop detecting code in correspondence with the drop detecting code signal received from the smart key 50 and the drop detecting code previously recorded in the code checking portion 18 coincide with each other, the operation proceeds to step S18. At step S18, the drop alarming timer 15 (refer to Fig. 2) is reset, thereafter, at step S19, the drop detecting timer 14 (refer to Fig. 2) is reset, and the operation proceeds to step S20. At step S20, the vehicle speed is calculated by the operating portion 13 by a procedure similar to that of step S11, and the operation returns to step S12. At step S17, when it is determined that the drop detecting code in correspondence with the drop detecting code signal received from the smart key 50 and the drop detecting code previously recorded in the code checking portion 18 do not coincide with each other, the operation proceeds to step S21. Additionally, at step S16, when it is determined that the drop detecting code signal is not received in the constant period of time, the operation also proceeds to step S21.

Thereafter, at step S21, it is determined whether the subtracting counter length t2 (refer to Fig. 5 and Fig. 6) of the drop alarming timer 15 (refer to Fig. 2) is calculated based on the vehicle speed calculated at step S11 or step S20. At step S21, when the subtracting counter length t2 of the drop alarming timer 15 is not calculated, the operation proceeds to step S22At step S22, based on the speed of the vehicle calculated by either of step S11 and step S20 which has been calculated at the last time, the subtracting counter length t2 (refer to Fig. 5 and Fig. 6) of the drop alarming timer 15 (refer to Fig. 2) is calculated by the operating portion 13. As shown by Fig. 5 and Fig. 6, the subtracting counter length t2 of the drop alarming timer 15 is calculated by the equation of t2=3600/vehicle speed by using the vehicle speed of the motorcycle 1 when the motorcycle 1 runs at a speed equal to or faster than 10 km/h, and the subtracting counter length t2 is fixed to 360 seconds when the speed of running the motorcycle 1 is equal to or slower than 10 km/h. Thereafter, the operation proceeds to step S23. At step S21, when the subtracting counter length t2 of the drop alarming timer 15 has been calculated, the operation proceeds to step S23.

At step S23, the drop alarming timer 15 is turned ON and subtraction or countdown of the subtracting counter is started. The operation then proceeds to step S24.

At step S24, it is determined whether the subtracting counter of the drop alarming timer 15 is 0. At step S24, when it is determined that the subtracting counter of the drop alarming timer 15 is not 0, the operation proceeds to step S25, the drop detecting timer 14 is reset, and the operation returns to step S13. At step S24, when it is determined that the subtracting counter of the drop alarming timer 15 is 0, the operation proceeds to step S26.

At step S26, the indicator 24 (refer to Fig. 2) provided at the meter 23 (refer to Fig. 2) is winked by the indicator control circuit 16 (refer to Fig. 2). Thereby, the driver can know that there is a high possibility of dropping the smart key 50.

Thereafter, as described above, at step S9 of Fig. 8, the determination of step S9 is repeated until the main switch 20 is turned OFF. Further, at step S9, when it is determined that the main switch 20 is turned OFF, the processing is finished.

According to the first embodiment, as described above, in order to detect dropping of the smart key 50, by providing the control portion 12 for changing the subtracting counter length t1 of the drop detecting code request signal of the drop detecting timer 14 in accordance with the vehicle speed of the motorcycle 1 at the vehicle control apparatus 25, when the subtracting counter length t1 of the drop detecting code request signal is reduced in accordance with the increase in the vehicle speed constituting a kind of a situation of running the motorcycle 1, it can be confirmed swiftly whether the smart key 50 is dropped, and therefore, the driver can be informed of the fact that there is a possibility of dropping the smart key 50 at a location as proximate to a location of dropping the smart key 50 as possible. In this case, when the motorcycle 1 runs at low speed, the subtracting counter length t1 of the drop detecting code request signal is increased, and therefore, a number of times of outputting the drop detecting code signal by the smart key 50 can be reduced, as a result, consumption of the battery of the smart key 50 can be restrained.

According to the first embodiment, by constituting the control portion 12 such that the subtracting counter length t1 of the drop detecting code request signal by the transmitting/receiving circuit 17 is changed in accordance with the speed of the motorcycle 1, easily, a period of transmitting the drop detecting code request signal by the transmitting/receiving circuit 17 can be changed in accordance with the running condition of the motorcycle 1.

According to the first embodiment, by constituting the control portion 12 such that the faster the speed of the motorcycle 1, the smaller the subtracting counter length t1 of the drop detecting code request signal by the transmitting/receiving circuit 17, easily, it can be informed that the smart key 50 is dropped at a location as proximate to a location of dropping the smart key 50 as possible, and when the vehicle runs at low speed or when the vehicle is stopped, effectively, consumption of the battery of the smart key 50 can be restrained.

According to the first embodiment, by providing the indicator 24 for notifying the driver that the smart key 50 is not disposed within a radius of 1 m of the motorcycle 1 when the code checking portion 18 cannot check the code of the drop detecting code signal at the vehicle control apparatus 25, easily, the driver can be informed that the smart key 50 is dropped.

According to the first embodiment, by constituting the indicator control circuit 16 such that in a case of not receiving the drop detecting code signal, the case is indicated at the indicator 24 continuously by a plurality of times until the subtracting counter length t2 of the drop alarming timer 15 becomes 0, even when the transmitting/receiving circuit 17 cannot receive the drop detecting code signal owing to noise from the motorcycle 1 and noise from a surround environment of the motorcycle 1, when the drop detecting code signal is received at next time of reception, it can be recognized that the smart key 50 is not dropped, and therefore, it can be restrained that an erroneous notification is frequently made to the driver.

According to the first embodiment, by controlling the subtracting counter length t2 of the drop alarming timer 15 to change in accordance with the running condition of the motorcycle 1 by the control portion 12, for example, by shortening a notifying time period until informing the driver that the smart key 50 is not disposed within the radius of 1 m of the motorcycle 1 in accordance with an increase in, for example, the vehicle speed constituting a kind of the situation of running the motorcycle 1, the driver can swiftly confirm whether the smart key 50 is dropped, and therefore, even when the motorcycle 1 runs at high speed, the driver can be informed that the smart key 50 is dropped at a location as proximate to a location of dropping the smart key 50 as possible.

### Second Embodiment

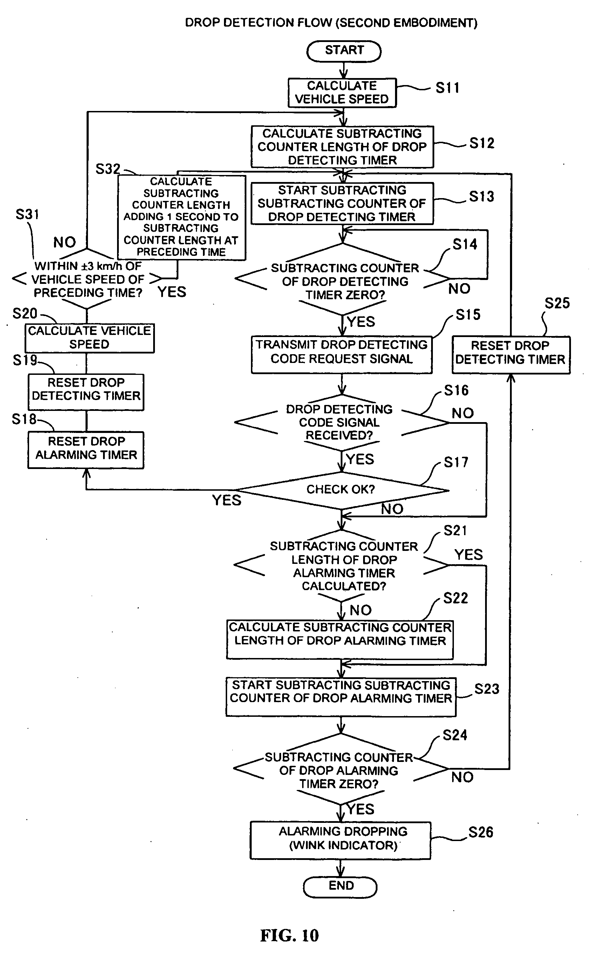

Fig. 10 is a flowchart showing a processing flow of dropping detection of a vehicle control apparatus according to a second embodiment of the invention. According to the second embodiment, different from the first embodiment, an explanation will be given of an example in which when the vehicle speed continues substantially at a constant state, the subtracting counter length of the drop detecting timer 14 is made to be longer than the subtracting counter length calculated at a preceding time by 1 second. Other constitution of the second embodiment is similar to that of the first embodiment.

The processing flow of the second embodiment other than drop detection is similar to that of step S1 through step S9 (refer to Fig. 8) of the first embodiment, and therefore, an explanation thereof will be omitted. Further, in a drop detection flow according to the second embodiment shown in Fig. 10, step S11 through step S26 are the same as those of the drop detection processing according to the first embodiment shown in Fig. 9, and therefore, an explanation thereof will be omitted.

A detailed explanation will now be given of the drop detection processing according to the second embodiment of the invention with reference to Fig. 2, Fig. 9 and Fig. 10.

According to the second embodiment, at succeeding step S31 after carrying out processing of step S11 through step S20 of Fig. 10, it is determined by the control portion 12 whether the vehicle speed calculated at step S20 immediately before step S31 is converged within a range of ±3 km/h of the vehicle speed calculated at step S11 or step S20 at preceding time. At step S31, when it is determined that the vehicle speed calculated at step S20 immediately before step S31 is not converged within the range of ±3 km/h of the vehicle speed calculated at step S11 or step S20 at the preceding time, the operation returns to step S12. At step S31, when it is determined that the vehicle speed calculated at step S20 immediately before step S31 is converged within the range of ±3 km/h of the vehicle speed calculated at step S11 or step S20 at the preceding time, the operation proceeds to step S32.

At step S32, a subtracting counter length (t1 +1) second of the drop detecting timer 14 constituted by adding 1 second to the subtracting counter length t1 second of the drop detecting timer 14 calculated at the preceding time is calculated by the operating portion 13. Thereafter, the operation returns to step S13.

According to the second embodiment, as described above, when the speed of the motorcycle 1 is within the range of ±3 km/h of the speed of the motorcycle 1 calculated at the preceding time, the subtracting counter length of the drop detecting code request signal is controlled to be larger than the subtracting counter length t1 calculated at the preceding time by 1 second. In this case, when the state in which the speed of the motorcycle 1 is substantially constant is continued, it seems that a motion of considerably moving the driver is reduced, and therefore, a possibility of dropping the smart key 50 owned by the driver is reduced. In this case, as described above, by controlling the subtracting counter length t1 of the drop detecting code request signal to increase, a number of times of outputting the drop detecting code signal by the smart key 50 can be reduced, and therefore, consumption of the battery of the smart key 50 can be restrained.

### Third Embodiment

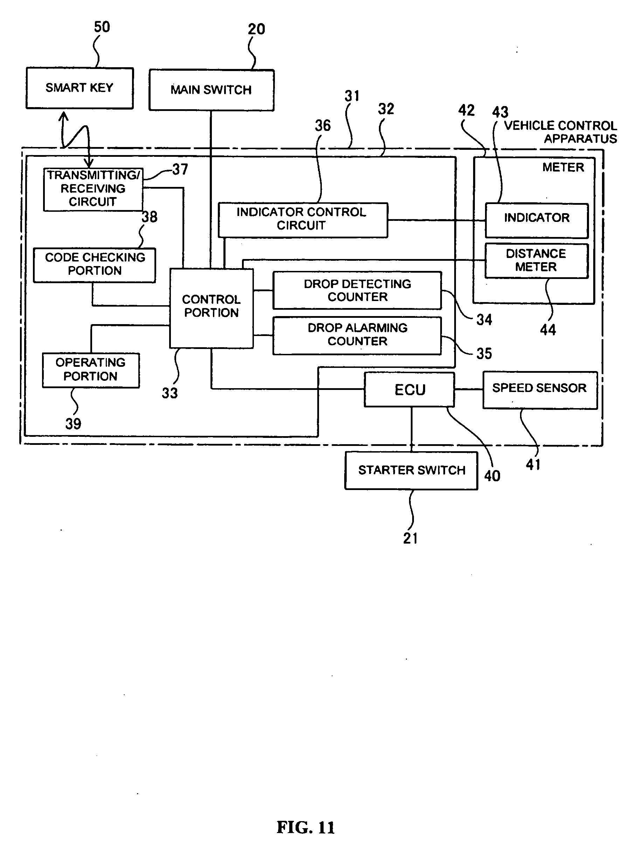

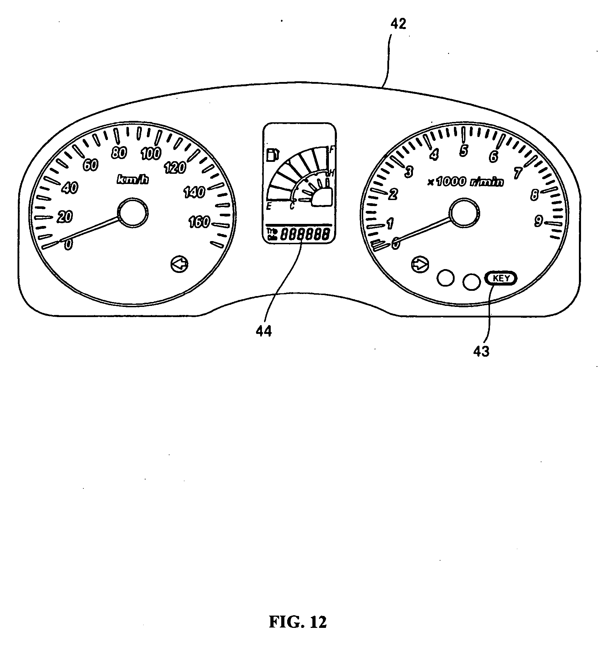

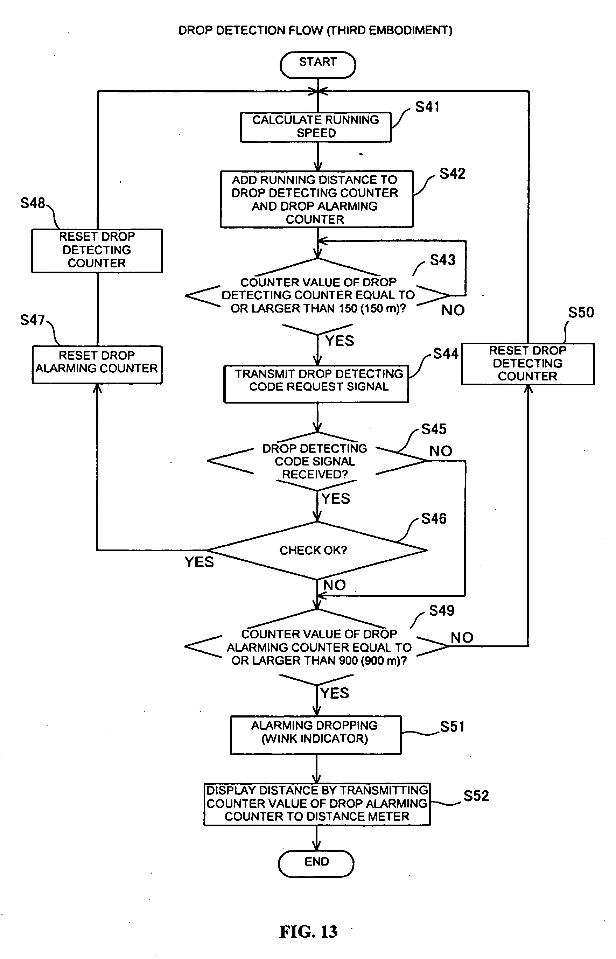

Fig. 11 and Fig. 12 are flowcharts for explaining a constitution of a vehicle control apparatus according to a third embodiment of the invention. Further, Fig. 13 is a diagram showing a processing flow of the vehicle control apparatus according to the third embodiment of the invention. According to the third embodiment, different from the first embodiment and the second embodiment, an explanation will be given of an example in which dropping is not detected and dropping is not alarmed by a period (time interval) changed in accordance with the vehicle speed but dropping is detected at each predetermined distance and dropping is alarmed when a constant distance longer than the distance of detecting the dropping is reached.

As shown by Fig. 11, a control unit 32 included in a vehicle control apparatus 31 according to the third embodiment is provided with a control portion 33, a drop detecting counter 34, a drop alarming counter 35, an indicator control circuit 36, a transmitting/receiving circuit 37, a code checking portion 38 and an operating portion 39 respectively connected to the control portion 33. The control portion 33 is an example of a 'transmission control portion' and a 'notification control portion' of the invention. The transmitting/receiving circuit 37 is an example of a 'transmitting means' and a 'receiving means' of the invention. The code checking portion 38 is an example of a 'code checking means' of the invention.

The control portion 33 is connected to an ECU (engine control unit) 40, and the main switch 20. The control portion 33 and ECU 40 are constituted to carry out serial communication by using SCI (not illustrated). ECU 40 is connected to the starter switch 21 and a speed sensor 41 arranged near the real wheel for detecting a revolution number of the rear wheel (not illustrated). The speed sensor 41 is an example of a 'rotation detecting means' of the invention. ECU 40 is provided with a function of transmitting that the starter switch 21 is turned ON to the control portion 33 when the starter switch 21 is turned ON. ECU 40 is also provided with a function of transmitting the revolution number of the rear wheel detected by the speed sensor 41 to the control portion 33.

According to the third embodiment, the indicator control circuit 36 is connected to an indicator 43 provided at a meter 42 (refer to Fig. 12). The indicator 43 is an example of an 'alarming means' of the invention. The indicator control circuit 36 is provided with a function of winking or turning off the indicator 43 by a signal from the control portion 33. The meter 42 is provided with a distance meter 44 comprising a liquid crystal display portion having a function of displaying a distance of running the motorcycle (not illustrated) of the third embodiment. The control portion 33 and the distance meter 44 are constituted to carry out serial communication by using SCI (not illustrated). The distance meter 44 is an example of a 'display portion' of the invention. The vehicle control apparatus 31 is constituted by the control unit 32, ECU 40, the speed sensor 41 and the meter 42.

According to the third embodiment, a counter length of the drop detecting counter 34 is set to a distance D1 (about 150 m). A counter length of the drop alarming counter 35 is set to a distance D2 (about 900 m). Thereby, there is constructed a constitution in which regardless of the speed of the motorcycle (not illustrated), when the distance D2 (about 900 m) from a spot at which the drop detecting code signal is not received first, or a spot at which the drop detecting code signal is not checked by the code checking portion 38 is reached, by winking the indicator 43, the driver can be notified that there is a possibility of dropping the smart key 50. According to the third embodiment, there is constructed a constitution in which by displaying a distance D3 from a spot at which the drop detecting code signal is not received first, or a spot at which the drop detecting code signal is not checked by the code checking portion 38 to a currently running spot at the distance meter 44 used for displaying a running distance, the driver can be informed of a distance from the spot of dropping the smart key 50. There is a possibility that the driver does not notice winking of the indicator 43 and display of the distance D2 at the distance meter 44 in alarming dropping, and therefore, the distance meter 44 is constituted to display the distance D3 adding a distance of further advancing the motorcycle from the spot of the distance D2 of winking the indicator 43. The distance D1 is an example of a 'second distance' of the invention, and the distance D2 is an example of a 'first distance' of the invention.

According to the third embodiment, the transmitting/receiving circuit 37 is constituted such that when the main switch 20 and the starter switch 21 and the like are depressed by the driver, the individual identification code request signal is transmitted to the smart key 50 by the control portion 33. The transmitting/receiving circuit 37 is constituted such that when the counter length of the drop detecting counter 34 becomes the distance D1 (about 150 m) in a state of making the communication system between the control unit 32 for detecting dropping of the smart key 50 and the smart key 50 ON by the control portion 33, the drop detecting code request signal is transmitted to the smart key 50. The transmitting/receiving circuit 37 is provided with a function of transmitting the signal received from the smart key 50 to the control portion 33.

The code checking portion 38 is provided with a function by which when the signal received from the smart key 50 is transmitted from the transmitting/receiving circuit 37 to the control portion 33, the signal is acquired from the control portion 33 thereby. The code checking portion 38 is recorded with the individual identification code and the drop detecting code the same as the codes recorded in the smart key 50. The code checking portion 38 is constituted such that when the individual identification code or the drop detecting code is transmitted from the control portion 33 (smart key 50), it is determined whether the transmitted individual identification code or the drop detecting code and the individual identification code or the drop detecting code recorded in the code checking portion 38 coincide with each other.

Other constitution of the third embodiment is similar to those of the first embodiment and the second embodiment. A detailed explanation will now be given of a drop detection processing of the vehicle control apparatus 31 according to the third embodiment of the invention with reference to Fig. 11 through Fig. 13. A drop detection process flow of the third embodiment is similar to step S1 through step S9 (refer to Fig. 8) of the first embodiment, and therefore, an explanation thereof will be omitted.

As shown by Fig. 13, at step S41, the revolution number of the rear wheel, not illustrated, detected by the speed sensor 41 (refer to Fig. 11) is transmitted from the control portion 33 (refer to Fig. 11) to the operating portion 39 (refer to Fig. 11), and the distance of running the motorcycle is calculated by the operating portion 39. At step S42, the calculated distance is added to the drop detecting counter 34 and the drop alarming counter 35 by way of the control portion 33.

Thereafter, at step S43, it is determined whether a counter value of the drop detecting counter 34 is 150 (distance D1 = about 150 m). At step S43, when it is determined that the counter value of the drop detecting counter 34 is not 150, the operation is repeated until the counter value becomes 150. At step S43, when it is determined that the counter value of the drop detecting counter 34 is 150, the operation proceeds to step S44.

At step S44, the drop detecting code request signal is transmitted from the transmitting/receiving circuit 37 to the smart key 50. At this occasion, when the smart key 50 is disposed within a communicatable range (about 1 m) at a vicinity of the control unit 32 (transmitting/receiving circuit 37), the drop detecting code request signal from the transmitting/receiving circuit 37 is received by the smart key 50, and the drop detecting code signal is transmitted from the smart key 50 to the transmitting/receiving circuit 37.

Thereafter, at step S45, it is determined whether the drop detecting code signal is received by the transmitting/receiving circuit 37 in a constant period of time. At step S45, when it is determined that the drop detecting code signal is received, the operation proceeds to step S46. At step S46, the received drop detecting code signal is transmitted to the code checking portion 38 by way of the control portion 33, and by the code checking portion 38, it is determined whether the drop detecting code in correspondence with the drop detecting code signal received from the smart key 50 and the drop detecting code previously recorded in the code checking portion 38 coincide with each other. At step S46, when it is determined that the drop detecting code in correspondence with the drop detecting code signal received from the smart key 50 and the drop detecting code previously recorded in the code checking portion 38 coincide with each other, the operation proceeds to step S47. Further, at step S47, the drop alarming counter 35 (refer to Fig. 11) is reset and the operation proceeds to step S48. Further, at step S48, the drop detecting counter 34 (refer to Fig. 11) is reset, the operation returns to step S41. At step S46, when it is determined that the drop detecting code in correspondence with the drop detecting code signal received from the smart key 50 and the drop detecting code previously recorded in the code checking portion 38 do not coincide with each other, the operation proceeds to step S49. Additionally, at step S45, when it is determined that the drop detecting code signal is not received, the operation also proceeds to step S49.

At step S49, it is determined whether the counter value of the drop alarming counter 35 is equal to or larger than 900 (900 m). At step 549, when the counter value of the drop alarming counter 35 is not equal to or larger than 900, the operation proceeds to step S50, the drop detecting counter 34 is reset, and the operation returns to step S41. At step S49, when it is determined that the counter value of the drop alarming counter 35 is equal to or larger than 900, the operation proceeds to step S51.

At step S51, the indicator 43 (refer to Fig. 11 and Fig. 12) provided at the meter 42 (refer to Fig. 11 and Fig. 12) is winked by the indicator control circuit 36 (refer to Fig. 11). Thereby, the driver can be informed that a possibility of dropping the smart key 50 is high.

Thereafter, at step S52, a counter value (distance) added to the drop alarming counter 35 is displayed on the distance meter 44 (refer to Fig. 11 and Fig. 12) provided at the meter 42 (refer to Fig. 11 and Fig. 12) by way of the control portion 33 and the indicator control circuit 36.

Thereafter, as described above, at step S9 of Fig. 8, the processing is finished by turning the main switch 20 OFF.

According to the third embodiment, as described above, by providing the control portion 33 notifying that the smart key 50 is dropped at the indicator 43 when the distance of moving the motorcycle reaches the distance D2 (about 900 m) in a case in which the drop detecting code signal cannot be checked, the driver can be alarmed of the fact that the smart key 50 is dropped or the like when the state in which the drop detecting code signal cannot be checked continuous reaches the distance of D2 (about 900 m), and therefore, regardless of the speed of moving the motorcycle, the driver can be informed of the fact that there is a possibility of dropping the smart key 50 or the like at a vicinity of a location remote from a location of dropping the smart key 50 by the distance D2 (about 900 m). Thereby, regardless of the running speed of the vehicle, the driver can be informed of the fact that the smart key 50 has been dropped at a spot of a constant distance (about 900 m) from a location of dropping the smart key 50.

According to the third embodiment, by constructing a constitution of providing the distance meter 44 for displaying the distance D3 from the spot at which the drop detecting code signal is not checked by the code checking portion 38 first to the currently running spot when the dropping of the smart key 50 is alarmed by the indicator 43, the driver can easily be informed of the distance from the spot of dropping the smart key 50. It should be understood that 'not checked' includes a case in which there is not reception, and a case in which although there is reception, checking is not established (the smart key is not a regular smart key, or a signal from other radio wave apparatus is received).

According to the third embodiment, by constructing a constitution in which the speed sensor 41 for detecting rotation of the rear wheel in moving the motorcycle is provided and distance of moving the motorcycle is calculated based on a detection result of the speed sensor 41, easily, the distance of moving the motorcycle can be calculated.

The embodiments disclosed this time are to be conceived to be exemplifications and not restrictive in all the aspects. The range of the invention is shown not by the explanation of the embodiments but by the scope of claims, and includes all of changes within the significance and range equivalent to the scope of claims.

For example, although according to the above-described embodiments, the motorcycle is shown as an example of a vehicle having the vehicle control apparatus using the portable machine, the invention is not limited thereto but is applicable also to other vehicle of a bicycle, a three-wheel vehicle, ATV (all Terrain Vehicle; irregular land running vehicle) or the like so far as the vehicle is a vehicle having a vehicle control apparatus using a portable machine (smart key).

Although according to the embodiments, in alarming dropping of the smart key, there is shown an example constituted such that dropping alarm is displayed at the indicator, the invention is not limited thereto but may be constituted such that dropping is alarmed by emitting an alarm sound.

Although according to the first embodiment, there is shown an example of setting both of the subtracting counter length of the drop detecting timer and the subtracting counter length of the drop alarming timer to change in accordance with the speed of running the motorcycle, the invention is not limited thereto but only either one of the subtracting counter length of the drop detecting timer and the subtracting counter length of the drop alarming timer may be set to change in accordance with the speed of running the motorcycle.

Although according to the third embodiment, there is shown an example of setting such that the distance calculated based on the revolution number of the rear wheel measured by the speed sensor is added to the drop detecting counter and the drop alarming counter, the invention is not limited thereto but it may be set that a revolution number of a wheel (front wheel or rear wheel) measured by the speed sensor is added to the drop detecting counter and the drop alarming counter.

### Description of Reference Numerals and Signs

1..motorcycle (vehicle)
12, 33..control portion (transmission control portion, notification control portion)
14..drop detecting timer (first timer)
15..drop alarming timer (second timer)
17, 37..transmitting/receiving circuit (transmitting means, receiving means)
18, 38..code checking portions (code checking means)
22, 41..speed sensors (rotation detecting means)
24, 43..indicators (alarming means)
25, 31..vehicle control apparatus
44..distance meter (display portion)
50..smart key (portable machine, portable device)

## Claims

1. A vehicle control apparatus (25, 31) comprising:
transmitting means (17, 37) for transmitting at least two code request signals to a portable device (50) associated with a vehicle (1) to determine if said portable device (50)is disposed within a predetermined range of the vehicle (1), wherein the at least two code request signals are separately transmitted over a transmission period;
receiving means (17, 37) for receiving a code signal transmitted from the portable device (50) receiving the code request signal;
code checking means (18, 38) for checking a code of the code signal received by the receiving means (17, 37); **characterised by**
alarming means (24, 43) for notifying a driver that the portable device (50) is not disposed within the predetermined range of the vehicle (1) when the code signal cannot be checked by the code checking means (18, 38) ; and
rotation detecting means (22, 41) for detecting rotation of a wheel when the vehicle (1) is moved;
a notification control portion (12, 33) for making the alarming means (24, 43) notify that the portable device (50) is not disposed within the predetermined range of the vehicle (1) depending on a detection result based on a number of revolutions of a wheel as determined by the rotation detection means (22, 41) under a state in which the code signal cannot be checked by the code checking means (18, 38).

2. The vehicle control apparatus (25, 31) according to Claim 1, further comprising a first timer (14) for measuring the transmission period of transmitting the code request signal.

3. The vehicle control apparatus (25, 31) according to Claim 1, further comprising a display portion (44) for displaying a distance from a location at which the code signal is initially not checked by the code checking means (18, 38) to a current location of the vehicle (1) when the distance of moving the vehicle (1) reaches the first distance and a notification by the alarming means (24, 43) is carried out.

4. The vehicle control apparatus (25, 31) according to Claim 1, further comprising transmission controlling means adapted to control the transmitting means (17, 37) to transmit the code request signal at each second distance shorter than the first distance as a transmission period of transmitting the code request signal to the portable device (50).

5. The vehicle control apparatus (25, 31) according to Claim 1, 3 or 4, wherein the distance of moving the vehicle (1) is calculated based on a detection result of the rotation detecting means (22, 41).

6. The vehicle control apparatus (25, 31) of claim 1, wherein the notification control portion (12, 33) is adapted to change a notification time period until the alarming means (24, 43) informs the driver that the portable device (50) is not disposed within the predetermined range of the vehicle (1) since the code checking means (18, 38) could not check the code of the code signal in accordance with a running condition the vehicle (1).

7. The vehicle control apparatus (25, 31) of claim 1 comprising:
a transmission control portion (12, 33) for changing a period of transmitting the code request signal by the transmitting means (17, 37) in accordance with a situation of running the vehicle (1).

8. The vehicle control apparatus (25, 31) of claim 1, wherein the notification control portion (12, 33) is adapted for changing a notification time period until the alarming means (24, 43) informs the driver that the portable machine (50) is not disposed within the predetermined range of the vehicle (1) since the code checking means (18, 38) could not check the code of the code signal in accordance with a situation of running the vehicle (1).

9. A vehicle (1) comprising the vehicle control apparatus (25, 31) according to any of the preceding claims.

## Patentansprüche

1. Fahrzeugsteuerungsvorrichtung (25, 31), Folgendes umfassend:
Übertragungsmittel (17, 37) zum Übertragen von mindestens zwei Codeanforderungssignalen an eine tragbare Einrichtung (50), die mit einem Fahrzeug (1) assoziiert ist, um zu bestimmen, ob die tragbare Einrichtung (50) innerhalb einer vorgegebenen Reichweite des Fahrzeugs (1) angeordnet ist, worin die mindestens zwei Codeanforderungssignale während einer Übertragungsperiode getrennt übertragen werden;
ein Empfangsmittel (17, 37) zum Empfangen eines Codesignals, das von der tragbaren Einrichtung (50) übertragenen wird, die das Codeanforderungssignal empfängt:
ein Codeprüfmittel (18, 38) zum Prüfen eines Codes des Codesignals, das vom Empfangsmittel (17, 37) empfangen wird;
**gekennzeichnet durch**
ein Alarmmittel (24, 43), um einen Fahrer zu benachrichtigen, dass die tragbare Einrichtung (50) nicht innerhalb der vorgegebenen Reichweite des Fahrzeugs (1) angeordnet ist, wenn das Codesignal vom Codeprüfmittel (18, 38) nicht geprüft werden kann; und
ein Drehungsdetektiermittel (22, 41) zum Detektieren der Drehung eines Rades, wenn das Fahrzeug (1) bewegt wird;
einen Benachrichtigungssteuerungsteil (12, 33), um das Alarmmittel (24, 43) zur Benachrichtigung zu veranlassen, dass die tragbare Einrichtung (50) nicht innerhalb der vorgegebenen Reichweite des Fahrzeugs (1) angeordnet ist, in Abhängigkeit von einem Detektionsergebnis auf der Basis einer Anzahl von Umdrehungen eines Rades, wie vom Drehungsdetektionsmittel (22, 41) während eines Zustands bestimmt wird, in dem das Codesignal vom Codeprüfmittel (18, 38) nicht geprüft werden kann.

2. Fahrzeugsteuerungsvorrichtung (25, 31) nach Anspruch 1, außerdem einen ersten Timer (14) zum Messen der Übertragungsperiode des Übertragens des Codeanforderungssignals umfassend.

3. Fahrzeugsteuerungsvorrichtung (25, 31) nach Anspruch 1, außerdem einen Anzeigeteil (44) umfassend zum Anzeigen einer Entfernung von einer Position, an der das Codesignal anfänglich vom Codeprüfmittel (18, 38) nicht geprüft wird, zu einer gegenwärtigen Position des Fahrzeugs (1), wenn die Entfernung der Bewegung des Fahrzeugs (1) die erste Entfernung erreicht und eine Benachrichtigung vom Alarmmittel (24, 43) ausgeführt wird.

4. Fahrzeugsteuerungsvorrichtung (25, 31) nach Anspruch 1, außerdem ein Übertragungssteuerungsmittel umfassend, dazu angepasst, das Übertragungsmittel (17, 37) zu steuern, um das Codeanforderungssignal an jeder zweiten Entfernung, die als eine Übertragungsperiode des Übertragens des Codeanforderungssignals kürzer ist als die erste Entfernung, an die tragbare Einrichtung (50) zu übertragen.

5. Fahrzeugsteuerungsvorrichtung (25, 31) nach Anspruch 1, 3 oder 4, worin die Entfernung der Bewegung des Fahrzeugs (1) auf der Basis eines Detektionsergebnisses des Drehungsdetektiermittels (22, 41) berechnet wird.

6. Fahrzeugsteuerungsvorrichtung (25, 31) nach Anspruch 1, worin der Benachrichtigungssteuerungsteil (12, 33) dazu angepasst ist, eine Benachrichtigungszeitperiode zu ändern, bis das Alarmmittel (24,43) den Fahrer informiert, dass die tragbare Einrichtung (50) nicht innerhalb der vorgegebenen Reichweite des Fahrzeugs (1) angeordnet ist, da das Codeprüfmittel (18, 38) den Code des Codesignals gemäß einem Laufzustand des Fahrzeugs (1) nicht prüfen konnte.

7. Fahrzeugsteuerungsvorrichtung (25, 31) nach Anspruch 1, Folgendes umfassend:
einen Übertragungssteuerungsteil (12, 33) zum Ändern einer Periode des Übertragens des Codeanforderungssignals durch das Übertragungsmittel (17, 37) gemäß einer Laufsituation des Fahrzeugs (1).

8. Fahrzeugsteuerungsvorrichtung (25, 31) nach Anspruch 1, worin der Benachrichtigungssteuerungsteil (12, 33) dazu angepasst ist, eine Benachrichtigungszeitperiode zu ändern, bis das Alarmmittel (24, 43) den Fahrer benachrichtigt, dass die tragbare Maschine (50) nicht innerhalb der vorgegebenen Reichweite des Fahrzeugs (1) angeordnet ist, da das Codeprüfmittel (18, 38) den Code des Codesignals gemäß einer Laufsituation des Fahrzeugs (1) nicht prüfen konnte.

9. Fahrzeug (1), das die Fahrzeugsteuerungsvorrichtung (25, 31) nach einem der vorhergehenden Ansprüche umfasst.

## Revendications

1. Appareil de contrôle de véhicule (25, 31), comprenant :
un moyen de transmission (17, 37) pour transmettre au moins deux signaux de demande de code à un dispositif portable (50) associé à un véhicule (1), en vue de déterminer si ledit dispositif portable (50) est situé dans une plage prédéterminée du véhicule (1), dans lequel lesdits au moins deux signaux de demande de code sont transmis séparément sur une période de transmission ;
un moyen de réception (17, 37) pour recevoir un signal de code transmis à partir du dispositif portable (50) recevant le signal de demande de code ;
un moyen de vérification de code (18, 38) pour vérifier un code du signal de code reçu par le moyen de réception (17, 37) ;
**caractérisé par**
un moyen d'avertissement (24, 43) pour signaler à un conducteur que le dispositif portable (50) n'est pas situé dans la plage prédéterminée du véhicule (1) lorsque le signal de code ne peut pas être vérifié par le moyen de vérification de code (18, 38) ; et
un moyen de détection de rotation (22, 41) pour détecter la rotation d'une roue lorsque le véhicule (1) se déplace ;
une partie de commande de notification (12, 33) pour amener le moyen d'avertissement (24, 43) à signaler que le dispositif portable (50) n'est pas situé dans la plage prédéterminée du véhicule (1), en fonction d'un résultat de détection basé sur un nombre de tours d'une roue, tel que déterminé par le moyen de détection de rotation (22, 41), dans un état où le signal de code ne peut pas être vérifié par le moyen de vérification de code (18, 38).

2. Appareil de contrôle de véhicule (25, 31) selon la revendication 1, comprenant en outre un premier temporisateur (14) pour mesurer la période de transmission du signal de demande de code.

3. Appareil de contrôle de véhicule (25, 31) selon la revendication 1, comprenant en outre une partie d'affichage (44) pour afficher une distance depuis un emplacement au niveau duquel le signal de code est initialement non vérifié par le moyen de vérification de code (18, 38) jusqu'à un emplacement en cours du véhicule (1), lorsque la distance de déplacement du véhicule (1) atteint la première distance et lorsqu'une notification est mise en oeuvre par le moyen d'avertissement (24, 43).

4. Appareil de contrôle de véhicule (25, 31) selon la revendication 1, comprenant en outre un moyen de commande de transmission apte à commander au moyen de transmission (17, 37) de transmettre le signal de demande de code à chaque seconde distance plus courte que la première distance, en tant qu'une période de transmission visant à transmettre le signal de demande de code au dispositif portable (50).

5. Appareil de contrôle de véhicule (25, 31) selon la revendication 1, 3 ou 4, dans lequel la distance de déplacement du véhicule (1) est calculée sur la base d'un résultat de détection du moyen de détection de rotation (22, 41).

6. Appareil de contrôle de véhicule (25, 31) selon la revendication 1, dans lequel la partie de commande de notification (12, 33) est apte à modifier une période de temps de notification jusqu'à ce que le moyen d'avertissement (24, 43) signale au conducteur que le dispositif portable (50) n'est pas situé dans la plage prédéterminée du véhicule (1), étant donné que le moyen de vérification de code (18, 38) n'a pas pu vérifier le code du signal de code selon un état de fonctionnement du véhicule (1).

7. Appareil de contrôle de véhicule (25, 31) selon la revendication 1, comprenant :
une partie de commande de transmission (12, 33) pour modifier une période de transmission du signal de demande de code par le moyen de transmission (17, 37) selon une situation de fonctionnement du véhicule (1).

8. Appareil de contrôle de véhicule (25, 31) selon la revendication 1, dans lequel la partie de commande de notification (12, 33) est apte à modifier une période de temps de notification jusqu'à ce que le moyen d'avertissement (24, 43) signale au conducteur que le dispositif portable (50) n'est pas situé dans la plage prédéterminée du véhicule (1), étant donné que le moyen de vérification de code (18, 38) n'a pas pu vérifier le code du signal de code selon une situation de fonctionnement du véhicule (1).

9. Véhicule (1) comprenant l'appareil de contrôle de véhicule (25, 31) selon l'une quelconque des revendications précédentes.
